# EUROPEAN PATENT SPECIFICATION

(11) **EP 2 664 958 B1**
(45) Date of publication and mention of the grant of the patent: **28.10.2015**
(21) Application number: 13165397.4
(22) Date of filing: 25.04.2013
(51) Int. Cl.: F21V 7/00, G03B 21/20, G02B 27/10, G03B 21/16

(54) **Light source apparatus and image projection apparatus**
Lichtquellenvorrichtung und Bildprojektionsvorrichtung
Appareil de source lumineuse et appareil de projection d'image

(30) Priority: 18.05.2012 JP 2012114923; 11.03.2013 JP 2013048137
(43) Date of publication of application: 20.11.2013
(73) Proprietor: Ricoh Company, Ltd., Tokyo 143-8555 (JP)
(72) Inventor: Nishimori, Takehiro, Ohta-ku Tokyo 143-8555 (JP); Fujita, Kazuhiro, Ohta-ku Tokyo 143-8555 (JP); Murai, Toshiharu, Ohta-ku, Tokyo 143-8555 (JP); Maeda, Ikuo, Ohta-ku Tokyo 143-8555 (JP); Takahashi, Tatsuya, Ohta-ku Tokyo 143-8555 (JP)
(74) Representative: Leeming, John Gerard

(56) References cited:
- WO-A2-2006/027621
- US-A1- 2002 114 158
- US-A1- 2009 190 347
- US-A1- 2010 020 538
- US-A1- 2010 118 530

## Description

### BACKGROUND

### Technical Field

The present invention relates to a light source apparatus having a plurality of light sources, and an image projection apparatus employing the light source apparatus.

### Background Art

Screen images of personal computers, video images, and image data stored in memory cards can be transmitted to image projection apparatuses known as projectors that can project images onto a screen. In the projector, light emitted from a light source is focused on a micro mirror display device known as a digital micro mirror device (DMD), or a liquid crystal plate, and then images are displayed as color images on the screen.

In the projector, a high intensity discharge lamp is conventionally used as the light source, but other light sources have been developed. For example, as a light emitting element for light source apparatuses, semiconductor elements such as a light emitting diode (LED), a laser diode (LD), or organic electroluminescence (OEL) have been developed as the light source.

The laser diode can be used as the light source for the image projection apparatuses to enhance, for example, color reproduction performance, light emission efficiency, and light use efficiency. Further, because the laser diode is a point light source or projects parallel beams, a lighting system can be designed easily, color lights can be synthesized using a simple configuration, and a projection lens having a small numerical aperture (NA) can be used.

When the laser diode is employed as the light source for the image projection apparatuses, how to secure sufficient light intensity becomes an issue. To secure sufficient light intensity, a number of laser diodes are packed two dimensionally on a plane in a matrix pattern. For example, JP-4711155-B (or JP-2011-13317-A or US2010/0328633 A1) discloses a configuration in which a plurality of light sources is arranged on a plane in a matrix pattern having rows and columns, and light beams exiting from the plurality of light sources arranged in rows and columns are synthesized using a plurality of rectangular reflection mirrors configured in a step-like structure to narrow the pitch of light beam fluxes emitted from the light sources configuring each row and the pitch of light beam fluxes emitted from the light sources configuring each column.

When a large number of light sources (e.g., laser diodes) are densely disposed on a plane, how to cool the light sources efficiently becomes an issue. The image projection apparatus can be made more compact by disposing multiple laser diodes densely on a plane. However, dissipation of heat of the inner laser diodes becomes difficult compared to the outer laser diodes, thereby requiring a cooling device having greater cooling capacity than necessary. Inadequate cooling can destabilize light emission of the laser diodes and shorten the lifetime of the laser diodes.

Cooling can be improved by setting a greater pitch between the light sources such as laser diodes used for the image projection apparatus. However, as the pitch increases so too does the size of the apparatus, as does a cross-section area of a light beam flux exiting from the light sources thereby necessitating a larger lens to condense the light beam flux. A light intensity equalizing unit such as a rod integrator can be used to equalize light intensity, but if an incidence angle becomes too great a feasible optical system may not be achievable. Further, if a light emission area increases, the etendue increases and a ratio of light not used for projection increases, i.e., light-use efficiency deteriorates.

In JP-4711155-B (or JP-2011-13317-A), a cross-section area of a light beam flux is reduced by synthesizing light beams using a reflection mirror. When high intensity light sources are disposed two dimensionally, a cooling performance of the light sources at the outer side and a cooling performance of the light sources at the inner side surrounded by the outer side become different, by which the output light intensity may become unstable. Further, when a plurality of mirrors is used for synthesizing light beams, it becomes difficult to design positions of each of mirrors and to adjust each of mirrors, and a space for disposing the plurality of mirrors as a step-like structure is required, which may not good for achieving a compact apparatus.

WO 2006/027621 A2 discloses a light engine for a projector using two curved mirrors to combine collimated light output from a plurality of sources.

### SUMMARY

The present invention is directed to a light source apparatus to suppress heat interference of a plurality of light sources and to achiecve a compact light source apparatus. A light source apparatus according to the present invention is defined in the appended claims.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of a light source apparatus according to an example embodiment of the present invention;
FIG. 2 is a cross-sectional view of the light source apparatus of FIG. 1 along a line A-A in FIG. 1;
FIG. 3 shows a schematic perspective view of the light source apparatus of FIG. 1 disassembled partially;
FIG. 4 is a partially expanded view of a coupling lens and a light source illustrating an offset between a curvature center axis of the coupling lens and an optical axis of a light source;
FIG. 5A is a schematic configuration of a light source apparatus, in which an optical axis of light exiting from each light source is angled with respect to a first reflection mirror, and FIG. 5B is a partially expanded view of a coupling lens and a light source illustrating a curvature center axis of the coupling lens and an optical axis of the light source are aligned;
FIGs. 6A and 6B are schematic views of a ventilator, FIG. 6A illustrates a side view of the ventilator indicating direction of wind, and FIG. 6B illustrates a front side view of the ventilator illustrating an airflow area;
FIG. 7 is a schematic view of a light source apparatus arranging light sources in a square pattern;
FIG. 8 is a schematic view of a light source apparatus arranging light sources in a multi-circle pattern such as concentric rings;
FIG. 9 is a schematic view of a light source apparatus, in which a light passing area of the first reflection mirror is disposed with a convex lens having a curvature;
FIG. 10 is a schematic view of a light source apparatus, in which a light passing area of the first reflection mirror is disposed with a concave lens having a curvature;
FIG. 11 is a schematic view of an image projection apparatus employing the light source apparatus; and
FIG. 12 is another schematic configuration of a light source apparatus;

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that have a similar function, operate in a similar manner, and achieve a similar result. Referring now to the drawings, apparatuses or systems according to example embodiments are described hereinafter.

In the following example embodiments, light beams emitted from a plurality of light sources disposed two dimensionally such as a plane can be synthesized, in which the plurality of light sources, a first reflector having a first reflection face, and a second reflector having a second reflection face are disposed. The plurality of light sources is disposed around a periphery of the second reflector. The first reflector and the second reflector are disposed at opposing side with each other. The light beams emitted from the plurality of light sources reflect on the first reflection face and then reflect on the second reflection face.

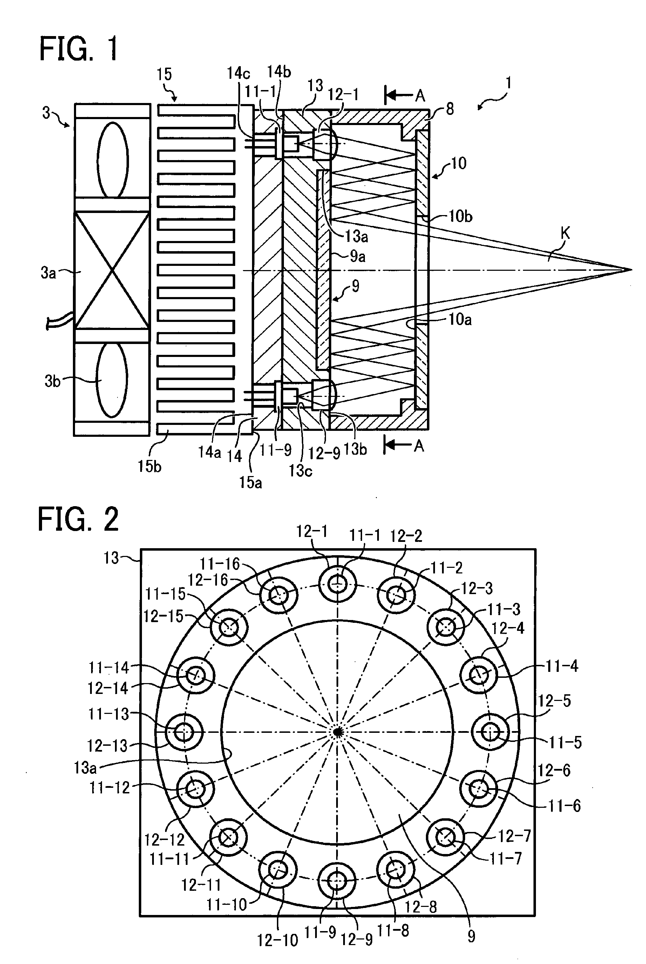

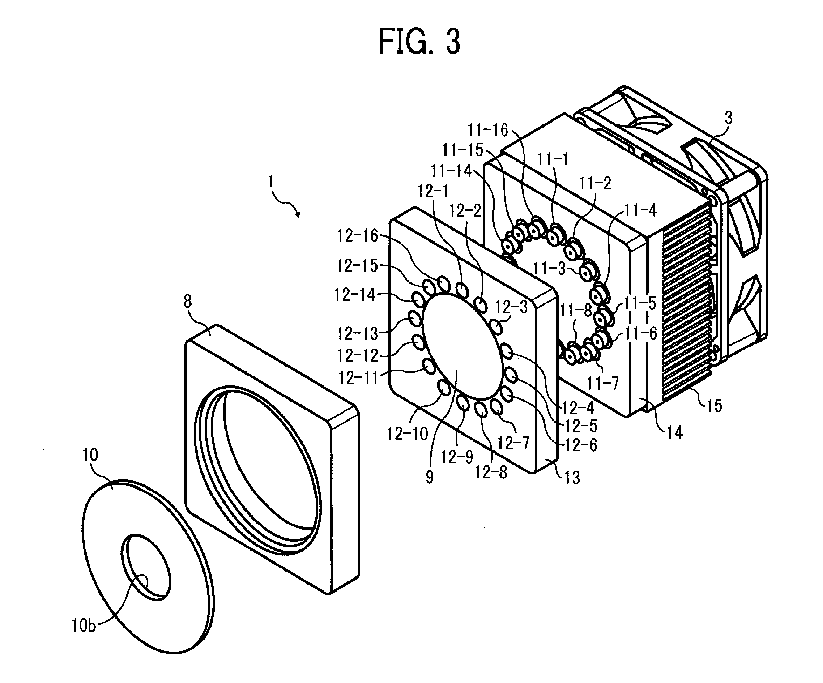

A description is given of a light source apparatus according to an example embodiment with reference to the drawings. FIG. 1 is a cross-sectional view of a light source apparatus 1 according to a first example embodiment, FIG. 2 is a cross-sectional view of the light source apparatus 1 along a line A-A of FIG. 1, and FIG. 3 is a perspective view of the light source apparatus 1 disassembled partially.

The light source apparatus 1 includes, for example, a light source assembly, a light source supporter 14, a coupling lens supporter 13, a second reflection mirror 9, a first reflection mirror 10, a reflection mirror supporter 8, a heat sink 15, and an axial flow fan 3.

The light source assembly includes, for example, a plurality of light sources 11-1 to 11-16 arranged in a circle pattern two dimensionally such as a plane, and a plurality of coupling lenses 12-1 to 12-16 arranged in a circle pattern two dimensionally such as a plane, in which the center of each light source 11-1 to 11-16 and the center of each coupling lenses 12-1 to 12-16 are aligned. The light source supporter 14 is used as a supporter to support the plurality of light sources 11-1 to 11-16. The coupling lens supporter 13 is attached with the plurality of coupling lenses 12-1 to 12-16.

The first reflection mirror 10 used as a first reflector and the second reflection mirror 9 used as a second reflector can be used to set light beams exiting from each of the coupling lenses 12-1 to 12-16 as converging light having reduced its cross-section area with respect to the center of the circle pattern. The heat sink 15 is used as a heat dissipater. The axial flow fan 3 is used as a ventilator. As shown in FIG. 1, the reflection mirror supporter 8, the coupling lens supporter 13, the light source supporter 14, the heat sink 15, and the axial flow fan 3 are sequentially disposed from the right side of the light source apparatus 1, which is the light exiting side.

The heat sink 15 is made of metal such as aluminum or cupper, and attached to one side face 14a of the light source supporter 14 by contacting a base 15a of the heat sink 15 to the one side face 14a. The axial flow fan 3 is disposed at a heat dissipation portion 15b of the heat sink 15, which is the opposite side of the base 15a of the heat sink 15. In the axial flow fan 3, a drive motor 3a disposed at the center portion is driven to rotate a fan 3b, which is a fin disposed at the outer side of the axial flow fan 3 to generate a wind flow toward the heat dissipation portion 15b, and the wind flow takes heat from the heat dissipation portion 15b. As above described, the heat sink 15 attached to the light source supporter 14 supporting the plurality of light sources, and the axial flow fan 3 that can cool the heat sink 15 by sending air such as a wind may be collectively configured as a cooling device of the light sources.

The light sources 11-1 to 11-16 are, for example, laser elements such as semiconductor lasers. As shown in FIG. 1, the light source supporter 14 is formed with attachment holes 14c which are through holes and disposed with a ring pattern. Each of the light sources 11-1 to 11-16 is inserted and fixed in the corresponding attachment hole 14c. Each of the light sources 11-1 to 11-16 can be designed to emit light having different colors. Each of the coupling lenses 12-1 to 12-16 includes a collimator lens that converts a light exiting from the laser element to a parallel light or a converging light.

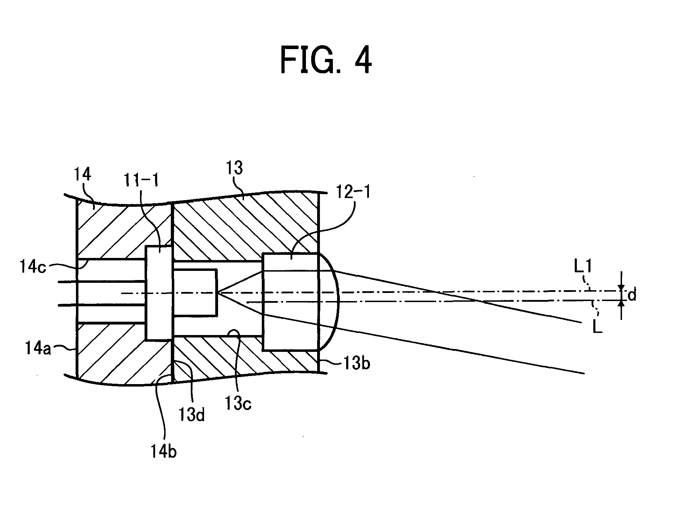

Each of the coupling lenses 12-1 to 12-16 is, for example, a convex lens made of glass or plastic material, and is disposed in a through-hole 13c formed for the coupling lens supporter 13. As shown in FIG. 4, a curvature center axis L of each of the coupling lenses 12-1 to 12-16 is offset with respect to an optical axis L1 of each of the light sources 11-1 to 11-16 toward the inner circumferential direction so that an axis deviation "d" is set between the curvature center axis L and the optical axis L1. In FIG. 1, positions of the coupling lenses 12-1 to 12-9 and the light sources 11-1 to 11-9 are shown.

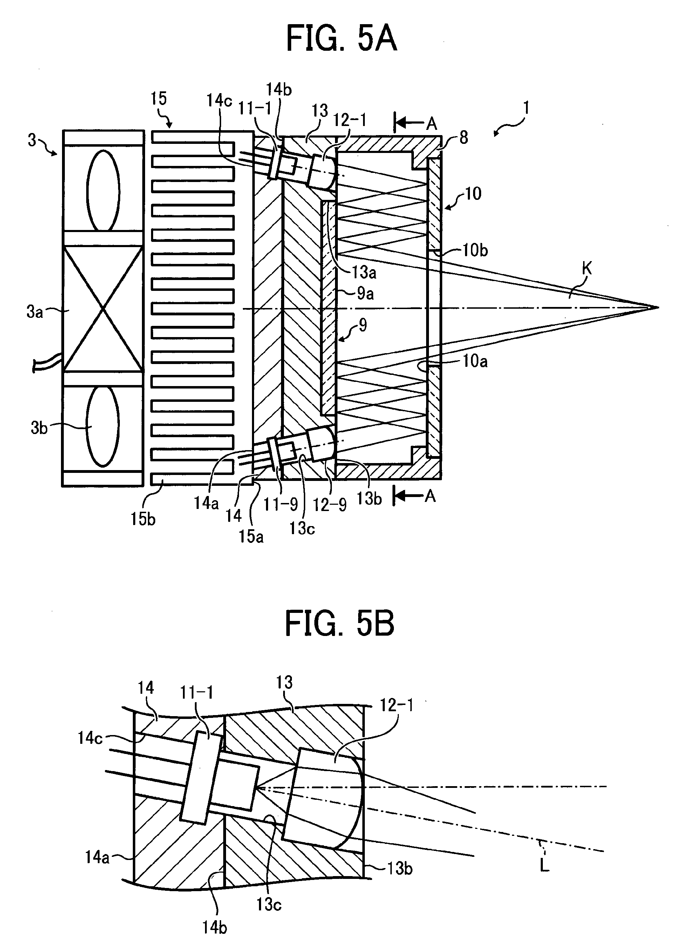

The layout of the coupling lenses 12-1 to 12-16 and the light sources 11-1 to 11-16 can be designed, for example, as shown in FIGs. 5A and 5B. Further, the optical axis of light exiting from the coupling lenses 12-1 to 12-16 can be angled with a given angle with respect to the first reflection mirror 10. FIG. 5B shows a positional relationship between the coupling lens 12-1 and the light source 11-1, which indicates a representative positional relationship of the coupling lenses and the light sources of the light source assembly. As shown in FIG. 5B, the optical axis of light exiting from the light source assembly can be angled with the given same angle with respect to the first reflection mirror 10.

By disposing the light sources 11-1 to 11-16 and the coupling lenses 12-1 to 12-16 as above described, as shown in FIG. 1, a light exiting from each of the light sources 11-1 to 11-16 passes through the corresponding coupling lenses 12-1 to 12-16 while a direction of the exiting light is angled with respect to the center of the circle ring pattern and the first reflection mirror 10. The lights exiting from the light sources 11-1 to 11-16 can be formed as an exit light having a substantially cone-shaped.

Further, when the plurality of light sources 11-1 to 11-16 and the coupling lenses 12-1 to 12-16 are disposed while setting the same given angle for the optical axis of exiting light from each of the coupling lenses 12-1 to 12-16 with respect to the first reflection mirror 10 as shown in FIG. 5A, the lights exiting from the light sources 11-1 to 11-16 can be focused at one portion without using a condensing lens, by which the number of parts can be reduced.

The reflection mirror supporter 8, the coupling lens supporter 13, and the light source supporter 14 can be made of, for example, metal such as aluminum, or a mold resin. The reflection mirror supporter 8, the coupling lens supporter 13, and the light source supporter 14 can be formed as an integral part, or can be formed as separate parts and then assembled as one unit.

The other side face 14b of the light source supporter 14 is attached to an attachment face 13d of the coupling lens supporter 13 (FIG. 4). A front face 13b of the coupling lens supporter 13, which is at the opposite position of the attachment face 13d, is formed with a concave portion 13a at the center portion of the coupling lens supporter 13.

The first reflection mirror 10 is, for example, a parallel plate made of a glass plate, and includes a reflection mirror area indicated as a reflection face 10a, and a light passing area for passing light beams. The reflection face 10a can be formed by depositing an aluminum layer on one face of the first reflection mirror 10. The reflection face 10a may be also referred to the first reflection face 10a. The light passing area may, for example, be an opening part 10b set at the center portion of the first reflection mirror 10, wherein the opening part 10b is formed, for example, as a through-hole. Alternatively, the light passing area can formed without forming an opening such as a through-hole. For example, the light passing area can be formed by depositing an aluminum layer on a glass plate while not depositing aluminum at a position corresponding to the opening part 10b, which means that the aluminum layer is formed with a ring pattern on the glass plate, and the center portion of the ring pattern not formed with the aluminum layer can be used as a transparent portion that can be used as the opening part 10b. As above described, the light passing area can be formed on the transparent plate, or can be formed as a through hole that the light can pass through, in which the transparent plate does not exist at the light passing area.

The second reflection mirror 9 is made of, for example, a glass plate, and a reflection area is formed on one face of the plate by depositing, for example, an aluminum layer, by which the one face can be used as a reflection face 9a, which may be also referred to a second reflection face 9a. The second reflection mirror 9 is disposed at the front face 13b of the coupling lens supporter 13 facing the first reflection face 10a. As shown FIGs. 1 and 2, the second reflection mirror 9 may be disposed in the concave portion 13a of the coupling lens supporter 13, wherein the concave portion 13a is the center portion of the coupling lens supporter 13, which is the inner side of the coupling lenses 12-1 to 12-16 arranged with a circle pattern.

The light exiting from each of the coupling lenses 12-1 to 12-16 strikes and reflects on the first reflection mirror 10 and then returns toward the coupling lenses 12-1 to 12-16 side. Then, the light reflects on the second reflection mirror 9 disposed in the concave portion 13a that is the center portion (or inner side) of the coupling lenses 12-1 to 12-16, and then returns toward the first reflection mirror 10. The light reflection is repeated for a given number of times between the first reflection mirror 10 and the second reflection mirror 9, and then the light exits from the light passing area such as the opening part 10b formed at the center portion of the first reflection mirror 10.

As above described, the light beams emitted from the plurality of light sources 11-1 to 11-16 and exiting from the coupling lenses 12-1 to 12-16 reflect for a given number of times, for example, a plurality of times between the first reflection mirror 10 and the second reflection mirror 9, and then synthesized as a light beam flux K while reducing its cross-section area, by which the light density of the light beam flux K can be increased, and thereby the light beam flux K having high light intensity can be emitted.

Further, the light beam emitted from each of the light sources 11-1 to 11-16 enters the first reflection mirror 10, which is a glass plate made of a mirror material with a given angle, and then reflects from the first reflection mirror 10. Because the light beams come closer to the center portion of the first reflection mirror 10 when the light beams reflect on the first reflection mirror 10, the light beams can be synthesized with a shorter distance. Further, by using the glass plate made of mirror material, a processing cost of the first reflection face 10a to reflect the light beams can be reduced.

In the above description shown in FIG. 1, each of the light beam emitted from each of the light sources 11-1 to 11-16 reflects, for example, two times on the first reflection mirror 10 and the second reflection mirror 9 before outgoing from the light source apparatus 1, which means the number of reflection times of each light beam at each of the first reflection mirror 10 and the second reflection mirror 9 is respectively two times, but the number of reflection times of at each of the first reflection mirror 10 and the second reflection mirror 9 can be other value such as one, three, and so on, as required.

In the above-described example embodiment, the light source can be a combination of a laser element and a collimator lens, wherein the collimator lens converts the light emitted from the laser element to a parallel light or converging light. In this configuration, the light beams emitted from the light sources 11-1 to 11-16 can be focused at one portion without using a condensing lens, and thereby the number of parts can be reduced.

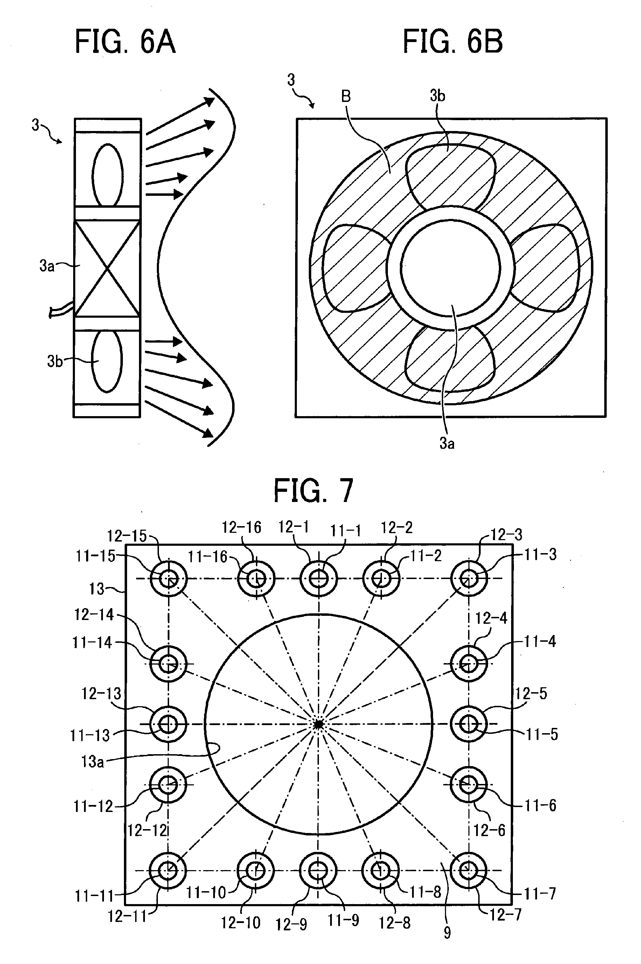

FIGs. 6A and 6B are schematic view of a wind profile of the axial flow fan 3. In FIG. 6A, a wind direction is indicated by an arrow, and in FIG. 6B, an area of airflow in the axial flow fan 3 is indicated by a shaded area B.

As show in FIG. 6A, the wind speed discharged from the axial flow fan 3 becomes faster at the outer side and slower at the inner side, and further, the wind is a rotational flow flowing from the inner side to the outer side direction. In the first example embodiment, the light sources 11-1 to 11-16 are arranged in a circle pattern in the light source supporter 14 so that the light sources 11-1 to 11-16 are positioned in an area corresponding to the area B shown in FIG. 6B. With this configuration, a pitch between each of the light sources can be set greater, by which heat interference among the light sources can be suppressed, and the wind can be directly hit to the light sources from the axial flow fan 3 effectively and efficiently, by which heat dissipation performance can be enhanced. Further, because the light sources 11-1 to 11-16 are attached and fixed to the light source supporter 14, the heat sink 15 can be disposed easily, and the axial flow fan 3 can send wind easily. Further, the size of the light source supporter 14 and a diameter of a circle for arranging the plurality of light sources 11-1 to 11-16 can be set freely, the number of light sources can be set freely, and a supporter having a greater heat capacity can be used as the light source supporter 14 to enhance the heat dissipation performance.

As above described, in the configuration of the first example embodiment, heat dissipation performance can be further enhanced, and a cross-section area of the light beams exiting from a plurality of light sources can be reduced, by which a compact light source apparatus can be devised. Further, the light source apparatus 1 of the first example embodiment can implement the above described effects, and has a design freedom, by which the light source apparatus 1 can be used various needs. The light source apparatus 1 of the first example embodiment can be applied to, for example, an image projection apparatus such as a projector.

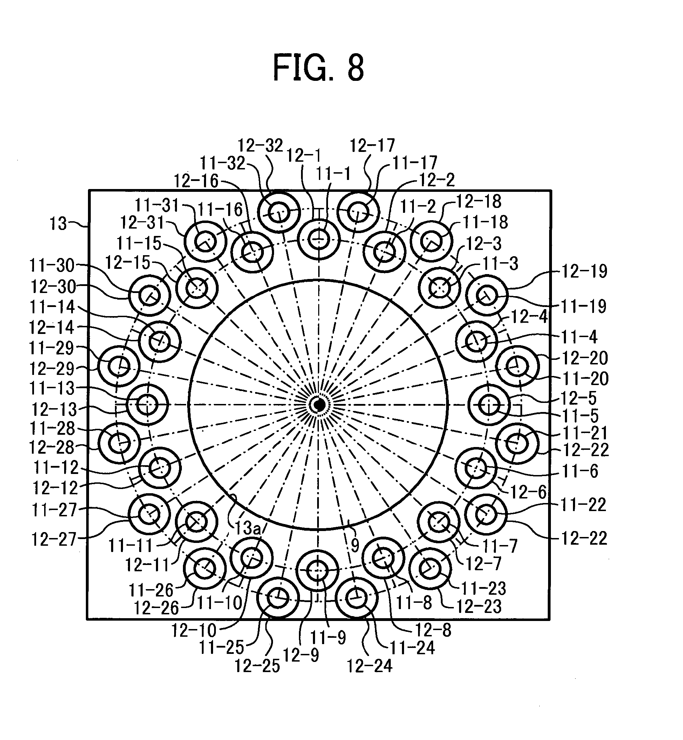

A description is given of other example embodiments of the light source apparatus with reference to FIGs. 7, 8, 9, and 10. FIG. 7 is the light source apparatus 1 having a plurality of light sources 11-1 to 11-16 and a plurality of coupling lenses 12-1 to 12-16 arranged in a polygon pattern such as a square pattern, and FIG. 8 is the light source apparatus 1 having a plurality of light sources 11-1 to 11-32 and a plurality of coupling lenses 12-1 to 12-32 arranged in a double-circle pattern having the same center, which is one example of a multi-circle pattern. The multi-circle pattern can be a concentric rings pattern having the same center for each one of the circles composing the concentric rings. As shown in FIG. 7, by disposing and arranging the light sources 11-1 to 11-16 and the coupling lenses 12-1 to 12-16 around the periphery of the second reflection mirror 9 with a given pattern, a converging light having reduced its cross-section area can be generated easily with an effect of multi-reflection between the first reflection mirror 10 and the second reflection mirror 9.

Further, as shown in FIG. 8, by disposing and arranging the light sources 11-1 to 11-16 and the coupling lenses 12-1 to 12-16 with the multi-circle pattern such as the concentric rings, the light intensity can be further increased easily. In FIG. 8, the light sources 11-1 to 11-16 and the coupling lenses 12-1 to 12-16 are arranged in the double-circle pattern having the same center, which is an example of the concentric-circles pattern, but the circle pattern is not limited to the double-circle pattern. For example, if a greater light intensity is required, other concentric-circles pattern such as a triple-circle pattern, a quadruple-circle pattern, and so on can be employed.

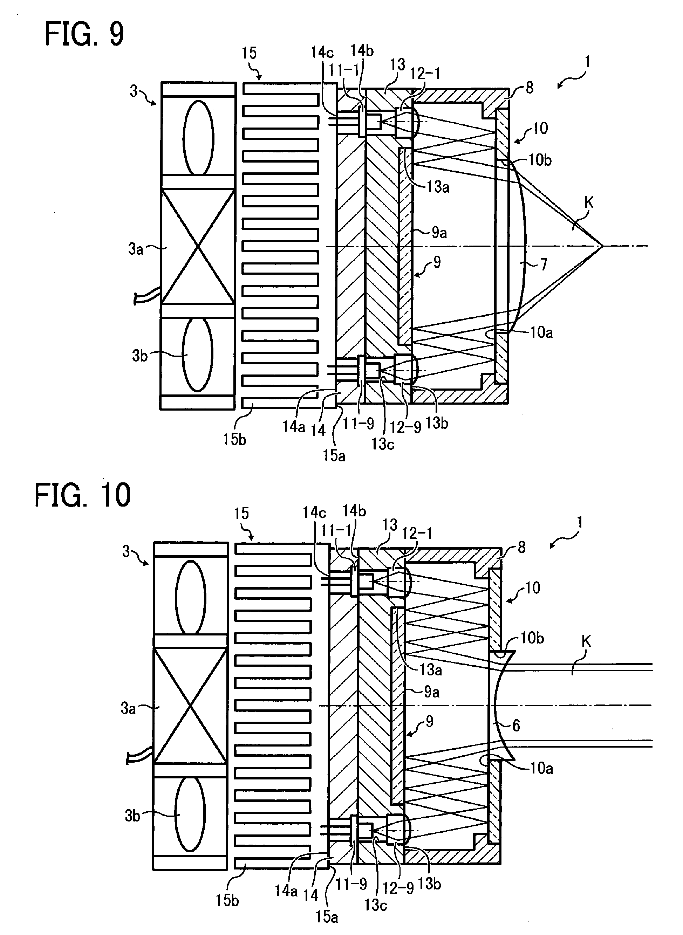

FIGs. 9 and 10 are other example configurations of the light source apparatus 1 employing lenses having curvature for the light passing area of the first reflection mirror 10. FIG. 9 is the light source apparatus 1 attaching a convex lens 7 to the opening part 10b used as the light passing area, and FIG. 10 is the light source apparatus 1 attaching a concave lens 6 to the opening part 10b used as the light passing area.

The configuration of FIG. 9 can reduce the number of reflection times between the first reflection mirror 10 and the second reflection mirror 9, and can set a shorter distance for condensing lights, and thereby the light intensity loss at the first reflection mirror 10 and the second reflection mirror 9 can be reduced, and further the light source apparatus 1 can be designed compact in size.

The configuration of FIG. 10 can be used with a light intensity equalizing unit such as a rod integrator 16, which will be described later. The configuration of FIG. 10 can set an incidence angle to the rod integrator 16 smaller, by which the light intensity can be further equalized.

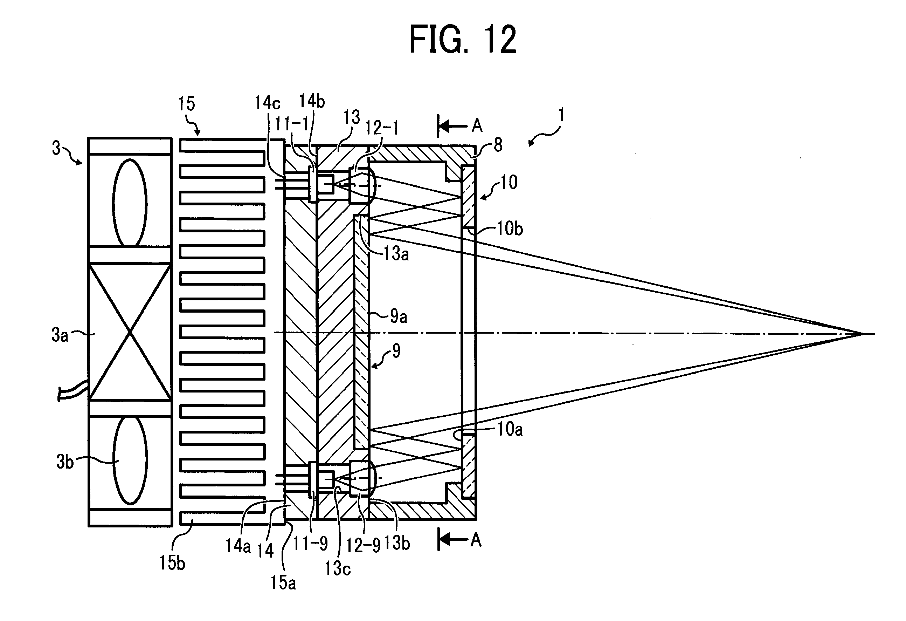

In the above described example embodiments, the light beam reflects for a plurality of times between the first reflection mirror 10 and the second reflection mirror 9, but the number of reflection times between the first reflection mirror 10 and the second reflection mirror 9 can be set one time as shown in FIG. 12, in which the light intensity loss at the first reflection mirror 10 and the second reflection mirror 9 can be reduced compared to a configuration reflecting the light beams for a plurality of times. The second reflector configured as the second reflection mirror 9 and the first reflector configured as the first reflection mirror 10 can be a single reflection mirror, but not limited hereto. For example, the first reflector and the second reflector can be configured by combing a plurality of mirrors.

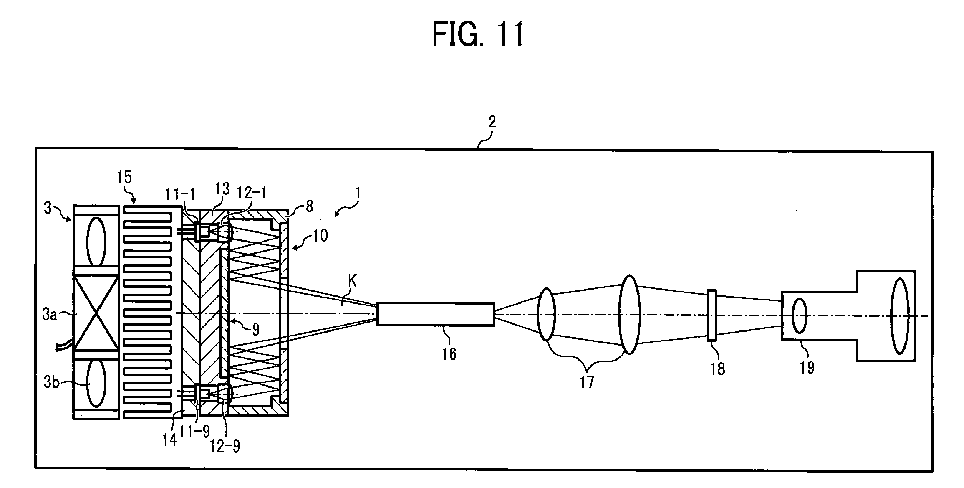

FIG. 11 shows an image projection apparatus 2 employing the above described light source apparatus 1. The image projection apparatus 2 includes, for example, the light source apparatus 1, the rod integrator 16, an image generation panel 18, a relay lens 17, and a projection lens 19. The light source apparatus 1 includes, for example, the plurality of light sources 11-1 to 11-16, the plurality of coupling lenses 12-1 to 12-16, the first reflection mirror 10 using the center portion as the light passing area, the second reflection mirror 9, the light source supporter 14, the coupling lens supporter 13, the reflection mirror supporter 8, the heat sink 15, and the axial flow fan 3. The rod integrator 16 is used as a light intensity equalizing unit. The relay lens 17 is used as a light transmission optical system to transmit light equalized its light intensity by the rod integrator 16 to the image generation panel 18. The projection lens 19 is used as a projection optical system to enlarge and project an image generated by the image generation panel 18.

The light beams emitted from the light sources 11-1 to 11-16 are condensed and then exit from the light source apparatus 1 as the light beam flux K. The light beam flux K enters the rod integrator 16, which equalizes light intensity of lights emitted from the light sources of the light source apparatus 1. The rod integrator 16 synthesizes color and equalizes the light intensity while the light beam flux K repeats the total reflection in the rod integrator 16, and then the light exits from the rod integrator 16.

The lights exiting from the rod integrator 16 enter the relay lens 17, and then radiate the image generation panel 18. Then, an image is projected onto a screen using the projection lens 19. In the image projection apparatus 2, the image generation panel 18 may be a pass-through type panel that generates images based on modulation signals, but other devices such as a reflection type panel or a micro-mirror device panel can be used. Further, the rod integrator 16 is an example of the light intensity equalizing unit, and other light intensity equalizing units can be used. Further, the relay lens 17 is one example of the light transmission optical system, and the projection lens 19 is one example of the projection optical system. Further, the light source apparatus 1, the rod integrator 16, the relay lens 17, and the image generation panel 18 can be collectively used as a display apparatus or device.

By employing the above described light source apparatus 1 for the image projection apparatus 2, the light beams emitted from a plurality of light sources can be synthesized as the light beam flux K having high light intensity and reduced its cross-section area, and the incidence angle to the rod integrator 16 can become smaller. Therefore, an area of the light radiating on the image generation panel 18 can be reduced, by which the projection lens 19 having a smaller numerical aperture (NA), which means a greater F-number lens, can be used. Therefore, the projection lens 19 can be designed and manufactured easily, and imaging performance can be maintained at a good enough level easily. The image projection apparatus 2 can use a plurality of light sources while enhancing the heat dissipation performance and the performance of equalizing the light intensity.

In the above described light source apparatus 1, the light beams reflected by the first reflection mirror 10 and the second reflection mirror 9 exit from the center portion of the first reflection mirror 10 as the light beam flux K, but the exit position (i.e., light passing area, opening part 10b) is not limited to the center portion of the first reflection mirror 10. Further, the position of the second reflection mirror 9 is not limited to the center portion of the coupling lens supporter 13, but can be changed depending on an exit direction and angle of light.

In the above described example embodiments, a plurality of light sources can be disposed around the periphery of the second reflector such as the second reflection mirror 9 and a pitch of the light sources can be set greater, by which heat interference from other light sources can be suppressed. Further, the cooling air can directly hit the plurality of light sources effectively and efficiently, by which the heat dissipation performance can be enhanced. Further, because the light beams emitted from the plurality of light sources are reflected between a plurality of mirrors facing each other to synthesize the light beams, a distance for synthesizing the light beams can become shorter, by which the light source apparatus can be designed into compact. In the above described example embodiments, the plurality of light sources are arranged two dimensionally such as a plane with a given pitch, and the heat dissipation performance can be enhanced. Further, a cross-section area of the light beam flux composed of lights exiting from the plurality of light sources can be reduced, by which a compact light source apparatus and a compact image projection apparatus having the compact light source apparatus can be devised.

Numerous additional modifications and variations are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. A light source apparatus (1), comprising:
a first reflector (10) having a first reflection face (10a);
a second reflector (9) having a second reflection face (9a), the second reflection face (9a) of the second reflector (9) and the first reflection face (10a) of the first reflector (10) disposed opposite each other; and
a plurality of light sources (11) disposed around a periphery of the second reflector (9), light beams emitted from the plurality of light sources (11) reflecting on the first reflector (10) and then reflecting on the second reflector (9); and
each of the light sources comprises a collimator lens (12) that converts light emitted from the light source into parallel light or converging light; **characterized in that**
a curvature center axis (L) of the collimator lens and an optical axis (L1) of the light source are offset.

2. A light source apparatus according to claim 1, wherein the second reflection face (9a) is flat.

3. A light source apparatus according to claim 2 wherein the optical axis of light emitted by the collimating lens (12) is angled with respect to the first reflection mirror.

4. A light source apparatus according to claim 3 wherein the first reflection (10a) face is flat; and light emitted by the collimating lens is reflected by the first reflection mirror (10) to the second reflection mirror (9) and is then reflected by the second reflection mirror (9) toward the first reflection mirror (10).

5. The light source apparatus (1) of any one of claims 1 to 4, wherein the plurality of light sources (11) is arranged in a substantially circular pattern or a polygon pattern around the periphery of the second reflector (9),
wherein the first reflector (10) is disposed at an exiting direction of light beams emitted from the plurality of light sources (11), and the first reflector (10) includes the first reflection face (10a) as a mirror face to reflect the light beam emitted from each of the light sources (11) to the light sources (11) side, and a light passing area (10b) to pass through a light beam flux,
wherein the second reflector (9) disposed opposite the first reflector (10) reflects the light beams emitted by the plurality of light sources (11) to the first reflection face (10a) of the first reflector (10),
wherein the light beam flux exits from the light passing area (10b) after being reflected between the first reflector (10) and the second reflector (9).

6. The light source apparatus (1) of claim 5, wherein the light passing area (10b) of the first reflector (10) is a transparent parallel plate.

7. The light source apparatus (1) of claim 5, wherein the light passing area (10b) of the first reflector (10) is a lens having a curvature.

8. The light source apparatus (1) of any one of claims 1 to 7, wherein each one of the plurality of light sources (11) has an optical axis for light emitted from each one of the plurality of light sources, and the optical axes of the plurality of light sources (11) are angled with respect to the first reflector (10) with the same angle.

9. The light source apparatus (1) of any one of claims 1 to 8, wherein each of the plurality of light sources (11) includes a laser element.

10. The light source apparatus (1) of any one of claims 1 to 9, wherein the plurality of light sources (11) is disposed in concentric rings.

11. The light source apparatus (1) of any one of claims 1 to 10, further comprising:
a heat dissipater attached to a supporter that supports the plurality of light sources; and
a ventilator to send air to the heat dissipater to cool the heat dissipater.

12. The light source apparatus (1) of claim 11, wherein the plurality of light sources (11) is at least partially disposed at a portion where the ventilator supplies air.

13. An image projection apparatus (2) comprising:
the light source apparatus (1) any one of claims 1 to 12;
a light intensity equalizing unit (16) to equalize light intensity of light coming from each of the light sources of the light source apparatus;
a light transmission optical system (17) to transmit exiting light, equalized in its light intensity by the light intensity equalizing unit (16), to an image generation panel (18); and
a projection optical system (19) to enlarge and project an image generated by the image generation panel (18).

14. A display apparatus comprising:
the light source apparatus (1) of any one of claims 1 to 12;
a light intensity equalizing unit (16) to equalize light intensity of light coming from each of the light sources of the light source apparatus;
an image generation panel (18) to generate an image using the light of each of the light sources;
a light transmission optical system (17) to transmit exiting light, equalized in its light intensity by the light intensity equalizing unit (16), to the image generation panel (18).

## Patentansprüche

1. Lichtquellenvorrichtung (1), die umfasst:
einen ersten Reflektor (10) mit einer ersten Reflexionsfläche (10a);
einen zweiten Reflektor (9) mit einer zweiten Reflexionsfläche (9a), wobei die zweite Reflexionsfläche (9a) des zweiten Reflektors (9) und die erste Reflexionsfläche (10a) des ersten Reflektors (10) einander gegenüberliegend angeordnet sind; und
mehrere Lichtquellen (11), die um einen Umfang des zweiten Reflektors (9) angeordnet sind, wobei Lichtstrahlen, die von den mehreren Lichtquellen (11) ausgesendet werden, auf dem ersten Reflektor (10) reflektiert werden und dann auf dem zweiten Reflektor (9) reflektiert werden; und
jede der Lichtquellen eine Kollimatorlinse (12) umfasst, die von der Lichtquelle ausgesendetes Licht in paralleles Licht oder konvergierendes Licht umsetzt; **dadurch gekennzeichnet, dass**
eine Krümmungsmittelpunktachse (L) der Kollimatorlinse und eine optische Achse (L1) der Lichtquelle versetzt sind.

2. Lichtquellenvorrichtung nach Anspruch 1, wobei die zweite Reflexionsfläche (9a) flach ist.

3. Lichtquellenvorrichtung nach Anspruch 2, wobei die optische Achse des durch die Kollimatorlinse (12) ausgesendeten Lichts in Bezug auf den ersten Reflexionsspiegel abgewinkelt ist.

4. Lichtquellenvorrichtung nach Anspruch 3, wobei die erste Reflexionsfläche (10a) flach ist; und durch die Kollimatorlinse ausgesendetes Licht durch den ersten Reflexionsspiegel (10) zu dem zweiten Reflexionsspiegel (9) reflektiert wird und dann durch den zweiten Reflexionsspiegel (9) in Richtung des ersten Reflexionsspiegels (10) reflektiert wird.

5. Lichtquellenvorrichtung (1) nach einem der Ansprüche 1 bis 4, wobei die mehreren Lichtquellen (11) in einem im Wesentlichen kreisförmigen Muster oder einem Polygonmuster um den Umfang des zweiten Reflektors (9) angeordnet sind,
wobei der erste Reflektor (10) an einer Ausgangsrichtung der von den mehreren Lichtquellen (11) ausgesendeten Lichtstrahlen angeordnet ist und der ersten Reflektor (10) die erste Reflexionsfläche (10a) als eine Spiegelfläche, um den von jeder der Lichtquellen (11) ausgesendeten Lichtstrahl zu der Lichtquellenseite (11) zu reflektieren, und einen Lichtdurchgangsbereich (10b), um durch einen Lichtstrahlfluss hindurchzuführen, enthält,
wobei der zweite Reflektor (9), der gegenüber dem ersten Reflektor (10) angeordnet ist, die durch die mehreren Lichtquellen (11) ausgesendeten Lichtstrahlen zu der ersten Reflexionsfläche (10a) des ersten Reflektors (10) reflektiert,
wobei der Lichtstrahlfluss aus dem Lichtdurchgangsbereich (10b) austritt, nachdem er zwischen dem ersten Reflektor (10) und dem zweiten Reflektor (9) reflektiert wurde.

6. Lichtquellenvorrichtung (1) nach Anspruch 5, wobei der Lichtdurchgangsbereich (10b) des ersten Reflektors (10) eine lichtdurchlässige parallele Platte ist.

7. Lichtquellenvorrichtung (1) nach Anspruch 5, wobei der Lichtdurchgangsbereich (10b) des ersten Reflektors (10) eine Linse mit einer Krümmung ist.

8. Lichtquellenvorrichtung (1) nach einem der Ansprüche 1 bis 7, wobei jede der mehreren Lichtquellen (11) eine optische Achse für von jeder der mehreren Lichtquellen ausgesendetes Licht hat und die optischen Achsen der mehreren Lichtquellen (11) in Bezug auf den ersten Reflektor (10) unter demselben Winkel abgewinkelt sind.

9. Lichtquellenvorrichtung (1) nach einem der Ansprüche 1 bis 8, wobei jede der mehreren Lichtquellen (11) ein Laserelement enthält.

10. Lichtquellenvorrichtung (1) nach einem der Ansprüche 1 bis 9, wobei die mehreren Lichtquellen (11) in konzentrischen Ringen angeordnet sind.

11. Lichtquellenvorrichtung (1) nach einem der Ansprüche 1 bis 10, die ferner umfasst:
einen Wärmeableitkörper, der an einem Träger befestigt ist, der die mehreren Lichtquellen trägt; und
einen Ventilator, um Luft zu dem Wärmeableitkörper zu schicken, um den Wärmeableitkörper zu kühlen.

12. Lichtquellenvorrichtung (1) nach Anspruch 11, wobei die mehreren Lichtquellen (11) zumindest teilweise an einem Abschnitt angeordnet sind, an dem der Ventilator Luft zuführt.

13. Bildprojektionsvorrichtung (2), die umfasst:
die Lichtquellenvorrichtung (1) nach einem der Ansprüche 1 bis 12;
eine Lichtstärkenangleichungseinheit (16), um die Lichtstärken des von jeder der Lichtquellen der Lichtquellenvorrichtung kommenden Lichts einander anzugleichen;
ein optisches Lichtübertragungssystem (17), um ausgehendes Licht, dessen Lichtstärke durch die Lichtstärkenangleichungseinheit (16) angeglichen wurde, an eine Bilderzeugungstafel (18) zu senden; und
ein optisches Projektionssystem (19), um ein durch die Bilderzeugungstafel (18) erzeugtes Bild zu vergrößern und zu projizieren.

14. Anzeigevorrichtung, die umfasst:
die Lichtquellenvorrichtung (1) nach einem der Ansprüche 1 bis 12;
eine Lichtstärkenangleichungseinheit (16), um die Lichtstärken des von jeder der Lichtquellen der Lichtquellenvorrichtung kommenden Lichts einander anzugleichen;
eine Bilderzeugungstafel (18), um ein Bild unter Verwendung des Lichts einer jeden der Lichtquellen zu erzeugen;
ein optisches Lichtübertragungssystem (17), um ausgehendes Licht, dessen Lichtstärke durch die Lichtstärkenangleichungseinheit (16) angeglichen wurde, an die Bilderzeugungstafel (18) zu übertragen.

## Revendications

1. Dispositif source de lumière (1) comprenant :
un premier réflecteur (10) comportant une première face de réflexion (10a) ;
un second réflecteur (9) comportant une seconde face de réflexion (9a), la seconde face de réflexion (9a) du second réflecteur (9) et la première face de réflexion (10a) du premier réflecteur (10) étant disposées à l'opposé l'une par rapport à l'autre ; et
une pluralité de sources de lumière (11) disposées autour de la périphérie du second réflecteur (9), les faisceaux lumineux émis par la pluralité de sources de lumière (11) se réfléchissant sur le premier réflecteur (10) et se réfléchissant ensuite sur le second réflecteur (9) ; et
chacune des sources de lumière comprend une lentille collimatrice (12) qui convertit la lumière émise par la source de lumière en lumière parallèle ou en lumière convergente ;
**caractérisé en ce que** l'axe central de courbure (L) de la lentille collimatrice et l'axe optique (L1) de la source de lumière sont décalés.

2. Dispositif source de lumière selon la revendication 1, dans lequel la seconde face de réflexion (9a) est plate.

3. Dispositif source de lumière selon la revendication 2, dans lequel l'axe optique de la lumière émise par la lentille collimatrice (12) est incliné par rapport au premier miroir de réflexion.

4. Dispositif source de lumière selon la revendication 3, dans lequel la première face de réflexion (10a) est plate ; et la lumière émise par la lentille collimatrice est réfléchie par le premier miroir de réflexion (10) vers le second miroir de réflexion (9) et est ensuite réfléchie par le second miroir de réflexion (9) vers le premier miroir de réflexion (10).

5. Dispositif source de lumière (1) selon l'une quelconque des revendications 1 à 4, dans lequel la pluralité de sources de lumière (11) est agencée selon un motif sensiblement circulaire ou un motif polygonal autour de la périphérie du second réflecteur (9),
dans lequel le premier réflecteur (10) est disposé dans la direction de la sortie des faisceaux lumineux émis par la pluralité de sources de lumière (11), et le premier réflecteur (10) comporte la première face de réflexion (10a) en tant que face de miroir pour réfléchir le faisceau lumineux émis par chacune des sources de lumière (11) vers le côté des sources de lumière (11), et une région de transmission de lumière (10b) pour traverser le flux du faisceau lumineux,
dans lequel le second réflecteur (9) disposé à l'opposé du premier réflecteur (10) réfléchit les faisceaux lumineux émis par la pluralité de sources de lumière (11) vers la première face de réflexion (10a) du premier réflecteur (10),
dans lequel le flux du faisceau lumineux sort de la région de transmission de lumière (10b) après avoir été réfléchi entre le premier réflecteur (10) et le second réflecteur (9).

6. Dispositif source de lumière (1) selon la revendication 5, dans lequel la région de transmission de lumière (10b) du premier réflecteur (10) est une plaque parallèle transparente.

7. Dispositif source de lumière (1) selon la revendication 5, dans lequel la région de transmission de lumière (10b) du premier réflecteur (10) est une lentille présentant une courbure.

8. Dispositif source de lumière (1) selon l'une quelconque des revendications 1 à 7, dans lequel chaque source de la pluralité de sources de lumière (11) possède un axe optique pour la lumière émise par chaque source de la pluralité de sources de lumière, et les axes optique de la pluralité de sources de lumière (11) sont inclinés du même angle par rapport au premier réflecteur (10).

9. Dispositif source de lumière (1) selon l'une quelconque des revendications 1 à 8, dans lequel chaque source de la pluralité de sources de lumière (11) comporte un élément à laser.

10. Dispositif source de lumière (1) selon l'une quelconque des revendications 1 à 9, dans lequel les sources de la pluralité de sources de lumière (11) sont disposées en anneaux concentriques.

11. Dispositif source de lumière (1) selon l'une quelconque des revendications 1 à 10, comprenant en outre :
un dissipateur de chaleur fixé à un support qui supporte la pluralité de sources de lumière ; et
un ventilateur destiné à envoyer de l'air vers le dissipateur de chaleur pour refroidir le dissipateur de chaleur.

12. Dispositif source de lumière (1) selon la revendication 11, dans lequel les sources de la pluralité de sources de lumière (11) sont au moins partiellement disposées au niveau d'une partie où le ventilateur délivre de l'air.

13. Appareil de projection d'image (2) comprenant :
le dispositif source de lumière (1) selon l'une quelconque des revendications 1 à 12 ;
une unité d'égalisation d'intensité de lumière (16) pour égaliser l'intensité de lumière de la lumière provenant de chacune des sources de lumière du dispositif source de lumière ;
un système optique de transmission de lumière (17) pour transmettre vers un panneau de génération d'image (18) la lumière sortante, égalisée en intensité de lumière par l'unité d'égalisation d'intensité de lumière (16) ; et
un système optique de projection (19) pour agrandir et projeter une image générée par le panneau de génération d'image (18).

14. Dispositif d'affichage comprenant :
le dispositif source de lumière (1) selon l'une quelconque des revendications 1 à 12 ;
une unité d'égalisation d'intensité de lumière (16) pour égaliser l'intensité de lumière de la lumière provenant de chacune des sources de lumière du dispositif source de lumière ;
un panneau de génération d'image (18) pour générer une image en utilisant la lumière de chacune des sources de lumière ;
un système optique de transmission de lumière (17) pour transmettre vers le panneau de génération d'image (18) la lumière sortante, égalisée en intensité de lumière par l'unité d'égalisation d'intensité de lumière (16).
